# EUROPEAN PATENT SPECIFICATION

(11) **EP 3 775 108 B1**
(45) Date of publication and mention of the grant of the patent: **23.08.2023**
(21) Application number: 19787094.2
(22) Date of filing: 10.10.2019
(51) Int. Cl.: C10J 3/72, C10K 1/00, C10K 3/04

(54) **METHOD TO PRODUCE BIO-METHANE FROM WASTES**
VERFAHREN ZUR HERSTELLUNG VON BIO-METHAN AUS ABFÄLLEN
PROCÉDÉ POUR PRODUIRE DU BIO-MÉTHANE À PARTIR DE DÉCHETS

(30) Priority: 11.10.2018 IT 201800009364
(43) Date of publication of application: 17.02.2021
(73) Proprietor: NextChem S.p.A., 00156 Rome (IT)
(72) Inventor: IAQUANIELLO, Gaetano, 00153 Rome (IT); SALLADINI, Annarita, 64026 Roseto degli Abruzzi (TE) (IT)
(74) Representative: Sarpi, Maurizio
(86) International application number: PCT/IB2019/058658
(87) International publication number: WO 2020/075114

(56) References cited:
- US-A1- 2007 129 450
- US-A1- 2010 272 619
- US-A1- 2013 053 456
- US-A1- 2015 166 910

## Description

The present invention concerns a method to produce bio-methane which will enable to substitute natural gas or other hydrocarbons with wastes or waste derived fuel (also known as RdF, standing for Refuse derived Fuel).

### FIELD OF INVENTION

The present invention relates generally to the conversion of waste materials, preferably industrial or municipal wastes or waste derived fuel, into chemicals, more specifically into (Bio) Methane.

Some examples of industrial wastes are chemical solvents, pigments, sludge, metals, ash, paints, sandpaper, paper products, industrial by-products, toxic waste, chemical waste, industrial solid waste and municipal solid waste are also designations of industrial wastes.

In the European Union, the semantic definition of municipal waste is 'mixed municipal waste,' given waste code 20 03 01 in the European Waste Catalog. Although the waste may originate from several sources that has nothing to do with a municipality, the traditional role of municipalities in collecting and managing these kinds of waste have produced the etymology 'municipal.' In any case a carbon matrix is present in a municipal waste.

### BACKGROUND OF INVENTION

As it is well known, the growth of population and wealth increase on a worldwide basis have resulted in a dramatic rise of the amount of produced wastes.

The increasing amount of wastes has resulted in a shortage of areas available for waste disposal, resulting in a unsustainable waste management. These problems led to serious public concerns, which in turn resulted in political actions aiming to reduce the amount of wastes reaching the environment. These actions aim to promote sustainable waste management solutions. The main objective of these policies is to promote the recycling of municipal solid waste and the conversion of waste to energy and valuable chemicals. These conversions can be performed using either biological (e.g., anaerobic digestion) or thermochemical processes (e.g., pyrolysis). Research efforts during the last years have been fruitful, and many publications demonstrated the effective conversation of municipal solid waste to energy and chemicals.

According to the prior art, a first -generation biomethane has been produced by decomposition coming from the anaerobic decomposition of organic waste, which is the result of the natural breakdown of organic matter. This raw or slightly pre-treated gas is called biogas, and can be used locally to produce electricity, heat, or both in a combined-cycle process. After further purification, the biogas becomes biomethane, 100% renewable energy of the same quality as natural gas, which can be used in vehicles or injected into the natural gas network. Second-generation biomethane is produced by gasification from ligno-cellulosic biomass (wood and straw), using a "thermochemical conversion" process. This process is carried out in two stages: firstly, the biomass is converted into synthetic gas; this synthetic gas is then transformed into biomethane by catalytic synthesis.

Third-generation biomethane comes from the direct transformation of micro-algae cultivated in high-yield photosynthetic reactors using natural light, water and minerals, while recycling CO2. This is an emerging technology due to be developed on an industrial scale by 2020-2030.

In the last years, conventional waste management is driven by minimizing the cost of collection and land-filling versus recycling and incineration, although more and more waste materials are recycled (paper, some materials, plastics).

New ideas are emerging to use wastes or what is left from conventional recycle process as a new source for chemicals production ("Waste as a source of carbon for methanol production" in methanol https://doi.org/10.1016/b978-0-444-63903-5.00004-2 or "Waste-to-chemicals for a circular economy: the case of urea production (Waste-to urea) ChemSusChem 10.1002/CSSC.201601555).

Production of a clean syngas from wastes by high temperature conversion with oxygen is following into such a model of circular economy (see also patent application WO2018/066013A1). Such approach is intended to save resources, mainly hydrocarbons and minimize emissions and pollution, and consequently protect from the environment also in terms of CO₂ emissions.

Prior art gasification reactors using biomasses, wastes or waste derived fuel as feedstocks are air based and cannot be used (directly) to produce pure bio-methane (for example WO2011/008236A2, WO2009/091325A1, US Pat nr. 5,584,255 or, 6,958,136 or 6,455,011 B1).

In air gasification technology working with air in the range of 750-900 °C, the syngas has together with hydrogen (H₂), carbon monoxide (CO), methane (CH₄), carbon dioxide (CO₂), nitrogen (N₂), a substantial amount of tar (heavy hydrocarbons) and other noxious products which need to be removed and disposed. Presence of nitrogen and such heavy hydrocarbons makes more complicated the downstream process to convert H₂ and CO₂ into bio-methane throughout the methanation reaction also called Sabatier reaction: 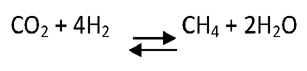 ΔH_{298K} = -165 kJ/mol

Methanation process has been deeply investigated and widely adopted to remove carbon monoxide in syngas mixture, particularly in ammonia production process.

US 2015/166910A1 discloses a process for producing methane from a waste gasification always with steam, eventually added with air or oxygen, through a catalytic conversion carried out through a plurality of high temperature converters and treatment units.

In view of all above, it is evident the need for a method and equipment to produce a syngas to be used for a subsequent production of bio-methane totally replacing the use of hydrocarbons.

Another object of this invention is to minimize emissions associated with waste disposal.

Another object of this invention is to recycle the waste carbon matrix into a valuable product, methane, capturing the CO₂ otherwise emitted.

Yet another object of this invention is to provide a cost effective method to make chemicals through the production of methane.

These and other results are achieved according to the present invention by coupling the high temperature conversion (>1200°C) with oxygen of wastes and the methanation reaction of H₂ and CO₂.

### SUMMARY OF THE INVENTION

According to one aspect of the invention, a process for producing a CO/H₂ rich mixture is provided in which the process comprises a plurality of high temperature (>1000°C) converters and corresponding first purification treatment unit/units, followed by a second purification treatment in a single line to further purify the syngas, followed by the CO shift, methanation and CO₂ removal.

The inventors started from the observation that syngas produced by high temperature conversion with oxygen has a composition which makes feasible the methanation reaction although it contains contaminants which need to be removed before such reaction.

Although the syngas composition depends on wastes composition, we could recognize the following family of components/contaminants:
- Metallic materials such as iron, lead, chromium, copper and others which are mainly discharged from the bottom of HT converter and other contaminants which include:
   a. Chlorine compounds mainly present as HCl
   b. Nitrogen compounds mainly present as HCN and NH₃
   c. Sulphur compounds present as H₂S, C0S and CS₂ where the ratio of H₂S/COS is normally 10/1 but it may be as 2 to 1.
   d. Particulate compounds mainly present as oxides or even metallic form.
- In order to remove these contaminants, it is provided a method where one portion of the above contaminants are eliminated from the produced syngas by a first purification treatment which comprises:
- An acidic scrubbing
- An alkaline scrubbing
- A mist removal with Wet Electrostatic precipitator (WESP)
- A washing with subcooled water

A liquid stream is generated by the first purification treatment and sent to Waste Water Treatment section together with other effluents. Discharged liquid is treated to allow metals precipitation. The resulting precipitate phase is concentrated in order to obtain a concentrated sludge containing most of contaminants and a clarified liquid stream that is routed to a thermal evaporation process (Multi-Effect Distillation) to obtain a purified stream suitable for internal reuse.

Syngas cooled down to 15-20°C in the subcooled washing column, is preheated up to 30-40°C by recovering low grade heat from the downstream process. It is accumulated into an atmosphere storage system from where it is compressed to 10-20 barg before entering the second purification treatment which comprises:
- A demetallization step
- A dechlorination step
- C0S and HCN hydrolysis
- Removal of H₂S through its conversion to elementary sulphur
- Polishing bed to remove traces of H₂S

Once the syngas is completely purified, it will be routed to:
- A water gas shift reactor, which is going to:
   maximize the content of H₂ and CO₂ into the stream, to modulate heat released during CO/CO₂ reaction with H₂ thus allowing for a more efficient temperature control in the methanation section avoiding complex and energy intensive gas recycle.

Although the methanation reaction may also process CO

CO + 3H₂ ↔ CH₄ + H₂O ΔH_{298K} = -206 kJ/mol

Its presence in the final gas it is definitely more difficult to remove than CO₂ and its reaction heat is much higher than CO₂ methanation.
- One or more methanation reactors
- Excess CO₂ removal unit to get rid of CO₂ from the bio-methane.

In the preferred embodiment of the invention the second purification treatment, CO shift conversion and final methanation are made from a plurality of reactors depending of the capacity. The terms "comprises/comprising" where used in this specification are taken to specify the presence or addition of one or move other features, integers, steps, components or group thereof.

Subject-matter of the invention is defined in the appended claims.

### Brief description of the drawings

These and other aspects, features and advantages of which embodiments of the invention are capable of, will be apparent and elucidated from the following description of the present invention, reference being made to the accompanying drawings in which:
- Fig. 1 is a schematic representation of the entire process for making bio-methane from the syngas produced by HT conversion of wastes with oxygen and a multiple trains;
- Fig. 2 is a schematic representation of the first purification treatment according to the present invention;
- Fig. 3 is a schematic representation of the second purification treatment relevant to HCl and metal particle removal according to the present invention;
- Fig. 4 is a schematic representation of the second purification treatment relevant to H₂S removal according to the present invention;
- Fig. 5 is a schematic representation of CO shift, methanation and CO₂ removal according to the present invention;
- Fig. 6 is a schematic representation of multiple methanation reactor with heat recovery;
- Fig. 7 is a schematic representation of the first purification treatment according to the present invention based on a plurality of HT converters;
- Fig. 8 is a schematic representation of the entire process with main streams.

### Detailed description of the invention

Specific embodiments of the invention are described with reference to the accompanying drawings. This invention may, however, be embodied in many different forms and should not constructed as limited to the embodiments set for herein. Rather, these embodiments are provided so that disclosure will be thorough and complete, and will fully convey the scope of the invention - as defined in the claims - to those skilled in the art.

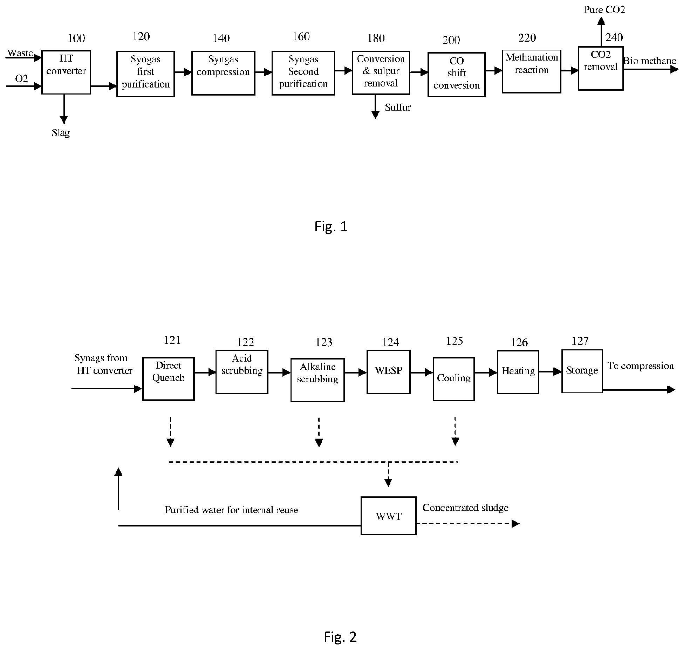

An overview of one embodiment according to the invention is shown in fig.1, when the frontend of the process consists of a plurality of HT converters with O₂ and first purification treatment depending of the plant capacity.

It is a specific feature of the present invention the use of such plurality in order to allow:
to reduce the fluctuation of syngas flow and composition to downstream processing;
to increase the operability time of the entire plant having at least two High Temperature converter line always in operation.

With reference to fig.1, according to said embodiment, a process for producing bio-methane from a syngas produced by a carbon-matrix waste conversion at high temperature and with oxygen, without any pollutants emission and in particular emissions of nitrogen and sulfur oxides, CO and particulate, comprises the following steps:
- high temperature conversion 100 of waste to syngas based on multiple trains;
- a first purification step 120 to remove from raw syngas particulate, bulk of metals, chlorine and NH₃ based also on multiple trains;
- a compression step 140 followed by a second purification 160; in dechlorine/demetalization reactors
- an H₂S conversion and sulphur removal step 180, followed by an H₂S deep polishing removal;
- A CO shift conversion 200;
- A methanation step 220 based on a single train multiple reactors;

A CO₂ removal unit from the bio-methane stream 2 240.

The raw syngas coming from an HT converter 100 of organic waste or Refuse Derived Fuel (RDF) with oxygen, once cooled in a proper heat recovery boiler or in a quench, (not shown), is purified in order to eliminate a portion of the above contaminants in the corresponding treatment section 120.

Fig. 2 shows the different steps of the first treatment section 120. Said first treatment comprises a quench 121, two scrubbing steps with an acidic column 122 followed by alkaline solution in column 123 and by a WESP (Wet Electrostatic precipitator) 124, further particulate and chlorine are removed, and the syngas is washed with subcooled water in 125 and preheated in block 126 to reduce the risk of condensation before its compression 140.

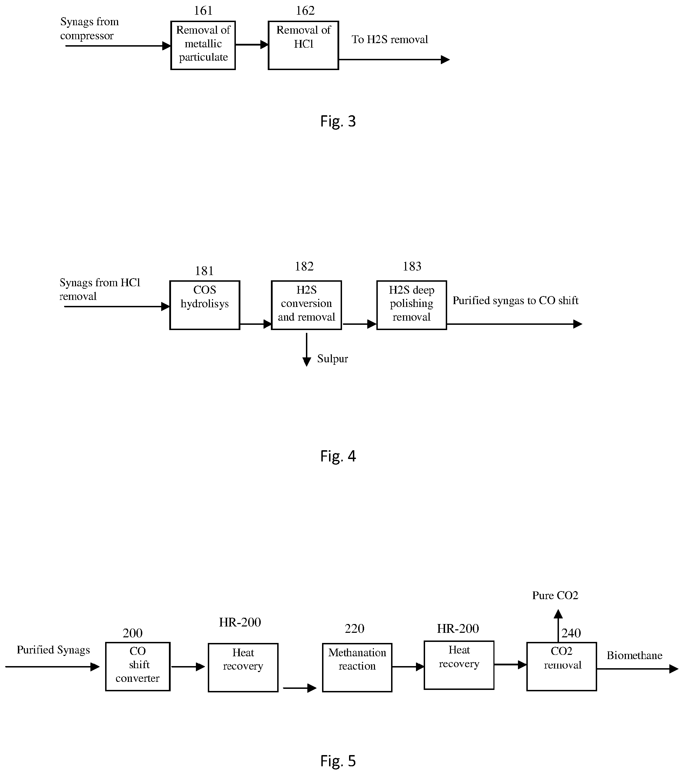

Fig. 3 shows further purification section where the metal and chloride are respectively removed in the blocks 161 and 162, before the removal of H₂S in the block 180.

Fig. 4 shows further purification steps of the section 180 where COS and HCN are hydrolyzed to H₂S and NH₃, block 181, H₂S is reduce to sulpur in a solid form (block 182), and H₂S tracing are removed (block 183) with a final polishing guard bed.

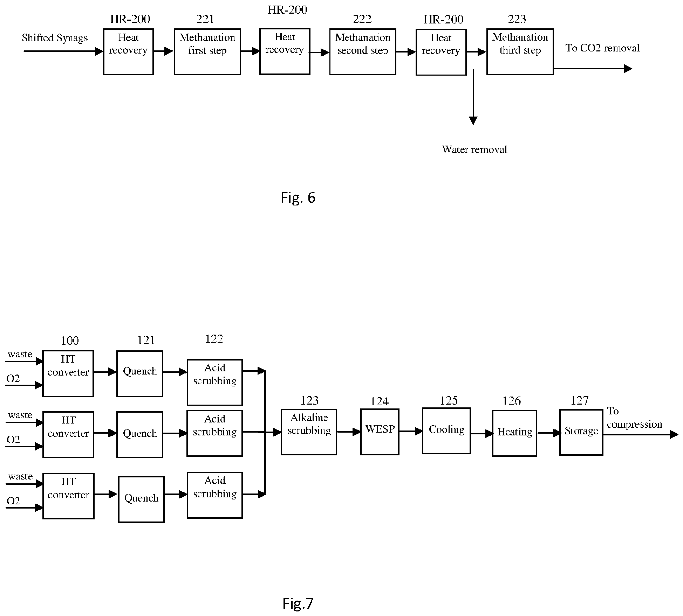

Fig. 5 shows the CO conversion step (200), where CO is converted to CO₂ and H₂ by adding steam. CO₂ and residual CO are then converted to CH in two or three 4 methanation reactors as showing (blocks 221, 222 and 223 of Fig.6) in series followed by the CO₂ removal unit via a cryogenic unit to allow the storage of CO₂ in liquid form or via amine absorption unit or via membrane separation 240.

In a preferred embodiment of the invention, the methanation reactors are adiabatic bed in series with intercooling and water removal in order to promote CO₂ conversion. A schematic representation of this embodiment is shown in fig. 6.

### Experimental tests

The. results of the experimental test for two different case studies have been reported in the following tables wherein:
- Table 1 is an example of two different waste feedstock;
- Table 2 is an overall material balance relevant to a feedstock based on a typical RDF (Waste 1),
- Table 3 is an overall material balance relevant to a feedstock based on a typical plastic waste (Waste 2).

**TABLE 1**

| | U.M. | Waste 1 RDF | Waste 2 Plastic waste |
|---|---|---|---|
| **LHV** | MJ/kg | 14.0 | 21.7 |

| **Composition** | | | |
|---|---|---|---|
| **C** | %w | 34.8 | 47.3 |
| **H** | %w | 4.6 | 7.1 |
| **N** | %w | 1.0 | 0.4 |
| **S** | %w | 0.15 | 0.2 |
| **Cl** | %w | 0.75 | 1.5 |
| **O** | %w | 17.4 | 14 |
| **Umidity** | %w | 21.6 | 9 |
| **Ash** | %w | 19.7 | 20.5 |

**TABLE 2**

| | **u.m.** | **1** | **2** | **3** | **4** | **5** | **6** | **7** | **8** | **9** | **10** |
|---|---|---|---|---|---|---|---|---|---|---|---|
| **Pressure** | Bar | am b | 2.5 | 1.04 | 34 | 31.5 | 31 | 28 | 27 | 1.1 | 35 |
| **Temperature** | °C | am b | 30 | 30 | 160 | 320 | 469 | 320 | 40 | 40 | 270 |
| **Mass flow rate** | ton/h | 1 | 0.54 | 1.06 | 1.03 | 2.4 | 2.4 | 1.23 | 0.21 | 0.83 | 1.36 |
| **Volumetric flow rate** | Nm3/ h | n.a. | 378 | 120 2 | 116 9 | 286 0 | 286 0 | 932 | 267 | 422 | 169 4 |

| **Composition** | | | | | | | | | | | |
|---|---|---|---|---|---|---|---|---|---|---|---|
| **H2** | %vol | (*) | - | 39.7 | 40.8 | 16.7 | 31.5 | 0.4 | 1.4 | - | - |
| **CO** | %vol | (*) | - | 40.7 | 41.8 | 17.1 | 2.3 | 0.02 | 0.08 | - | - |
| **CO2** | %vol | (*) | - | 15.2 | 15.7 | 6.4 | 21.2 | 46.2 | 3.2 | 100 | - |
| **CH4** | %vol | (*) | - | - | - | - | - | 25.8 | 89.9 | - | - |
| **O2** | %vol | (*) | 99.8 | - | - | - | - | - | - | - | - |
| **H2O** | %vol | (*) | - | 3.4 | 0.6 | 59.4 | 44.5 | 26.3 | 0.8 | - | 100 |
| **N2** | %vol | (*) | - | 1.0 | 1.0 | 0.4 | 0.4 | 1.3 | 4.5 | - | - |
| **Ar** | %vol | (*) | 0.2 | 0.02 | 0.02 | 0.00 8 | 0.00 8 | 0.03 | 0.09 | - | - |
| **COS** | ppm | (*) | - | 33 | 34 | - | - | - | - | - | - |
| **HCl** | ppm | (*) | - | 256 | 263 | - | - | - | - | - | - |
| **H2S** | ppm | (*) | - | 708 | 725 | - | - | - | - | - | - |
| **Particulate matter** | ppm | (*) | - | 0.1 | 0.1 | - | - | - | - | - | - |

| | | | | | | | | | | | |
|---|---|---|---|---|---|---|---|---|---|---|---|
| (^{∗}) Refer to Waste 1- RDF in table 1 | | | | | | | | | | | |

**TABLE 3**

| | **u.m.** | **1** | **2** | **3** | **4** | **5** | **6** | **7** | **8** | **9** | **10** |
|---|---|---|---|---|---|---|---|---|---|---|---|
| Pressure | bar | am b | 2.5 | 1.04 | 34 | 31.5 | 31 | 28 | 27 | 1.1 | 35 |
| Temperature | °C | am b | 30 | 30 | 160 | 320 | 469 | 338 | 40 | 40 | 270 |
| Mass flow rate | ton/h | 1 | 0.67 | 1.54 | 1.49 | 4.05 | 4.05 | 1.79 | 0.34 | 1.16 | 2.55 |
| Volumetric flow rate | Nm3/ h | n.a. | 469 | 189 3 | 184 0 | 501 6 | 501 6 | 140 4 | 450 | 590 | 318 3 |

| Composition | | | | | | | | | | | |
|---|---|---|---|---|---|---|---|---|---|---|---|
| H2 | %vol | (*) | - | 42.2 | 43.4 | 15.9 | 30.8 | 0.6 | 1.9 | - | - |
| CO | %vol | (*) | - | 44.2 | 45.4 | 16.6 | 1.8 | 0.04 | 0.13 | - | - |
| CO2 | %vol | (*) | - | 9.2 | 9.5 | 3.5 | 18.3 | 42.9 | 2.7 | 100 | - |
| CH4 | %vol | (*) | - | - | - | - | - | 28.9 | 90.2 | - | - |
| O2 | %vol | (*) | 99.8 | - | - | - | - | - | - | - | - |
| H2O | %vol | (*) | - | 3.4 | 0.62 | 63.5 | 48.7 | 26.2 | 0.7 | - | 100 |
| N2 | %vol | (*) | - | 1.0 | 1.0 | 0.4 | 0.4 | 1.3 | 4.2 | - | - |
| Ar | %vol | (*) | 0.2 | 0.02 | 0.02 | 0.00 7 | 0.00 7 | 0.03 | 0.08 | - | - |
| COS | ppm | (*) | - | 34 | 35 | - | - | - | | - | - |
| HCl | ppm | (*) | - | 221 | 228 | - | - | - | | - | - |
| H2S | ppm | (*) | - | 737 | 755 | - | - | - | | - | - |
| **Particulate matter** | ppm | (*) | - | 0.1 | 0.1 | - | - | - | - | - | - |

| | | | | | | | | | | | |
|---|---|---|---|---|---|---|---|---|---|---|---|
| (*) Refer to Waste 2 - Plastic waste in table 1 | | | | | | | | | | | |

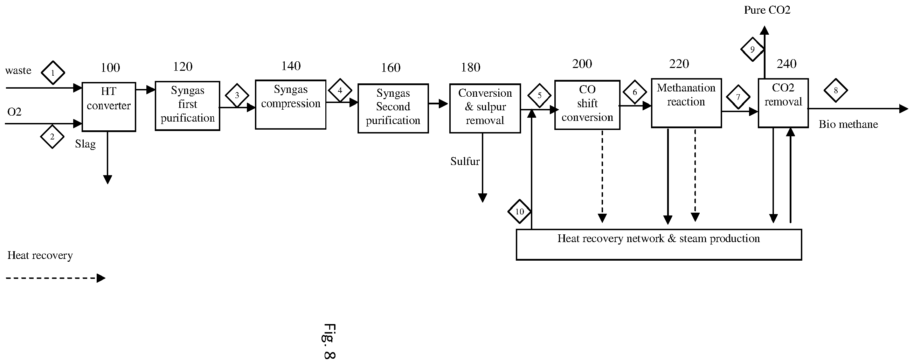

With reference to fig.8, Table 2 and Table 3 report heat and material balance relevant to main process streams. First one is related to a feedstock 1 based on typical Rdf and the second one is related to a typical plastic waste. The relative compositions are shown in Table 1 as Waste 1 and Waste 2.

Starting of Waste 1, as you can see in column 8 of Table 2, corresponding to the final biomethane stream 8 outcoming from block 240 of fig.8, the % vol of methane is 89.9, without the presence of particulate compounds, chlorine compounds as HCl and nitrogen compounds as H₂S and COS, while the other outcoming stream 9 is 100% vol. CO₂.

Starting of Waste 2, as reported on the Table 3, the composition of stream 8 is 90.2 %vol of methane, without the presence of particulate compounds, chlorine compounds as HCl and nitrogen compounds as H₂S and COS, the other outcoming stream 9 being always 100% vol. CO₂.

The results of the two experimental tests demonstrate the efficacy of the method and related apparatus to produce bio-methane from wastes according to the present invention.

Although the foregoing invention has been described in some detail by way of illustration and examples for purposes of clarity of understanding, one skilled in the art will appreciate that certain changes and modifications may be practiced within the scope of the appended claims.

## Claims

1. A process for producing methane from a carbon matrix waste through high temperature conversion >1000°C with oxygen, as a gasification with oxygen, without any pollutant emission, and in particular emissions of nitrogen and sulphur oxides, comprising the following steps:
- a high temperature conversion >1000°C with oxygen (100) of waste to syngas;
- a first purification treatment (120) to remove particulate, metals, chlorine and NH₃ compounds from the obtained raw syngas;
- a compression step (140) of the syngas coming from said first purification treatment (120), followed by
- a second purification treatment (160) which comprises in a single line
• demetallization (161), and
• dechlorine (162) step followed by:
- an H₂S conversion and sulphur removal step (180) which comprises in series:
• an hydrolysis section (181) where C0S is converted into CO₂ and H₂S;
• an H₂S removing unit and transforming it into elementary sulfur in a solid form (182);
• a deep polishing step (183) where traces of H₂S are removed from the syngas;
- a water gas shift (200), to convert the CO in the deep polished syngas with steam into CO₂ and H₂ followed by:
- a methanation step (220), where the CO₂ is converted into CH₄ through reaction with H₂ followed by:
- a CO₂ removal unit (240) via a cryogenic or amine unit or membrane separation to remove the CO₂ from the obtained methane stream, wherein
the carbon matrix waste is selected from a solid municipal waste, a derived waste fuel as refuse derived fuel, agricultural waste, urban and/or industrial sludge, biomass, plastic waste, a solid chemical waste and combination thereof.

2. The process according to claim 1 where both the high temperature conversion (100) of the waste to syngas and the first purification treatment (120) to remove from syngas particulate, metals, chlorine and ammines, are carried out through a plurality of high temperature converters and treatment unit for each of said high temperature converters, depending of the plant capacity.

3. The process according to claim 1 and 2 where the methanation reaction (220), is realized in two or more catalytic bed (221,222,223) in series.

4. The process according to claim 1 and 2 where the methanation reaction (220), is realized in two or more catalytic bed (221,222,223) in series with recovery of heat released during exothermic reaction.

5. The process according to claim 1 and 2 where the methanation reaction (220), is realized in two or more catalytic bed (221,222,223) in series with recovery of heat released during exothermic reaction and partial water removal in order to enhance CO₂ conversion.

6. The process according to one of the preceding claims where the CO₂ removed from methane is removed with a cryogenic unit and stored in a liquid form.

7. The process according to one of the preceding claims where a fraction of CO₂ removed from methane is used to inertize the feeding system of the gasifier.

8. The process according to one of the preceding claims wherein the H₂ required to minimize or avoid any CO₂ excess is obtained by water electrolysis.

9. The process according to one of the preceding claims where extra H₂ required to minimize or avoid any CO₂ emission is produced by electrolysis only when excess of electricity is available from the grid.

## Patentansprüche

1. Verfahren zur Herstellung von Methan aus einem Kohlenstoffmatrixabfall durch
Hochtemperaturumsetzung >1000°Cmit Sauerstoff, als eine Vergasung mit Sauerstoff, ohne jegliche Schadstoffemission, und insbesondere Emissionen von Stickstoff- und Schwefeloxiden, umfassend die folgenden Schritte;
- eine Hochtemperaturumsetzung >1000°C mit Sauerstoff (100) von Abfällen zu Synthesegas;
- eine erste Reinigungsbehandlung (120) zur Entfernung von Partikeln, Metallen, Chlor und NH₃-Verbindungen aus dem erhaltenen Rohsynthesegas;
- einen Verdichtungsschritt (140) des Synthesegases, das aus der ersten Reinigungsbehandlung (120) kommt, gefolgt von
- eine zweite Reinigungsbehandlung (160), die in einer einzigen Linie
• einen Demetallisierungsschritt (161), und
• einen Dechlorierungsschritt (162) umfasst; gefolgt von:
- einen H₂S-Umsetzungs- und Schwefelentfernungsschritt (180), der in Reihe umfasst:
• einen Hydrolyseabschnitt (181), in dem COS in CO₂ und H₂S umgesetzt wird;
• eine H₂S-Entfernungseinheit und dessen Umwandlung in elementaren Schwefel in einer festen Form (182);
• einen tiefgehenden Verfeinerungsschritt (183), bei dem Spuren von H₂S aus dem Synthesegas entfernt werden;
- eine Wassergas-Shift-Reaktion 200, um das CO im tiefgehend verfeinerten Synthesegas mit Dampf in CO₂ und H₂ umzusetzen, gefolgt von:
- einen Methanisierungsschritt (220), bei dem das CO₂ durch Reaktion mit H₂ in CH₄ umgesetzt wird, gefolgt von:
- eine CO₂-Entfernungseinheit (240) mittels einer kryogenen oder Amin-Einheit oder einer Membrantrennung zur Entfernung des CO₂ aus dem erhaltenen Methanstrom, wobei
der Kohlenstoffmatrixabfall ausgewählt ist aus festem Siedlungsabfall, Ersatzbrennstoff wie Sekundärbrennstoff, landwirtschaftlichen Abfällen, Siedlungs- und/oder Industrieschlamm, Biomasse, Kunststoffabfall, festem Chemieabfall und Kombinationen davon.

2. Verfahren gemäß Anspruch 1, wobei sowohl die Hochtemperaturumsetzung (100) des Abfalls zu Synthesegas als auch die erste Reinigungsbehandlung (120) zur Entfernung von Partikeln, Metallen, Chlor und Aminen aus dem Synthesegas durch eine Vielzahl von Hochtemperaturkonvertern und eine Behandlungseinheit für jeden der Hochtemperaturkonverter in Abhängigkeit von der Anlagenkapazität durchgeführt werden.

3. Verfahren gemäß Anspruch 1 und 2, wobei die Methanisierungsreaktion (220) in zwei oder mehr Katalysatorbetten (221, 222, 223) in Reihe durchgeführt wird.

4. Verfahren gemäß Anspruch 1 und 2, wobei die Methanisierungsreaktion (220) in zwei oder mehr Katalysatorbetten (221, 222, 223) in Reihe mit Rückgewinnung der während der exothermen Reaktion freigesetzten Wärme durchgeführt wird.

5. Verfahren gemäß Anspruch 1 und 2, wobei die Methanisierungsreaktion (220) in zwei oder mehr Katalysatorbetten (221, 222, 223) in Reihe mit Rückgewinnung der während der exothermen Reaktion freigesetzten Wärme und teilweiser Wasserentfernung durchgeführt wird, um die CO₂-Umsetzung zu erhöhen.

6. Verfahren gemäß einem der vorhergehenden Ansprüche, wobei das aus Methan entfernte CO₂ mit einer kryogenen Einheit entfernt und in einer flüssigen Form gelagert wird.

7. Verfahren gemäß einem der vorhergehenden Ansprüche, wobei eine Fraktion des aus dem Methan entfernten CO₂ zur Inertisierung des Zufuhrsystems des Vergasers verwendet wird.

8. Verfahren gemäß einem der vorhergehenden Ansprüche, wobei das zur Minimierung oder Vermeidung eines CO₂-Überschusses erforderliche H₂ durch Wasserelektrolyse erhalten wird.

9. Verfahren gemäß einem der vorhergehenden Ansprüche, bei dem zusätzliches H₂, das zur Minimierung oder Vermeidung von CO₂-Emissionen erforderlich ist, nur dann durch Elektrolyse erzeugt wird, wenn ein Überschuss an Elektrizität aus dem Netz verfügbar ist.

## Revendications

1. Procédé de production de méthane à partir de déchets à matrice carbonée par conversion à haute température > 1 000 °C avec de l'oxygène, en tant que gazéification avec de l'oxygène, sans aucune émission de polluants, et en particulier des émissions d'oxydes d'azote et de soufre, comprenant les étapes suivantes :
- une conversion à haute température > 1 000 °C avec de l'oxygène (100) de déchets en gaz de synthèse ;
- un premier traitement de purification (120) pour éliminer du gaz de synthèse brut obtenu les particules, les métaux, le chlore et les composés de NH₃ ;
- une étape de compression (140) du gaz de synthèse provenant du premier traitement de purification (120), suivie par
- un deuxième traitement de purification (160) qui comprend dans une ligne unique
• une démétallisation (161), et
• une étape de déchloration (162) suivie par :
- une étape de conversion du H₂S et d'élimination du soufre (180) qui comprend en série :
• une section d'hydrolyse (181) où le COS est converti en CO₂ et H₂S ;
• une unité d'élimination de H₂S et de transformation de celui-ci en soufre élémentaire sous forme solide (182) ;
• une étape de raffinage en profondeur (183) où les traces de H₂S sont éliminées du gaz de synthèse ;
- une conversion du gaz à l'eau (200), pour convertir le CO dans le gaz de synthèse raffiné en profondeur avec de la vapeur d'eau en CO₂ et H₂ suivie par :
- une étape de méthanation (220), où le CO₂ est converti en CH₄ par réaction avec H₂, suivie par :
- une unité d'élimination du CO₂ (240) via une unité cryogénique ou à amine ou par séparation sur membrane pour éliminer le CO₂ du courant de méthane obtenu, dans lequel
les déchets à matrice carbonée sont sélectionnés parmi un déchet municipal solide, un combustible résiduaire dérivé tel qu'un combustible dérivé d'ordures, un déchet agricole, une boue urbaine et/ou industrielle, une biomasse, un déchet plastique, un déchet chimique solide et une combinaison de ceux-ci.

2. Procédé selon la revendication 1, où à la fois la conversion à haute température (100) des déchets en gaz de synthèse et le premier traitement de purification (120) pour éliminer du gaz de synthèse les particules, les métaux, le chlore et les amines, sont effectués par une pluralité de convertisseurs à haute température et une unité de traitement pour chacun desdits convertisseurs à haute température, en fonction de la capacité de l'installation.

3. Procédé selon les revendications 1 et 2, où la réaction de méthanation (220) est réalisée dans deux ou plus de deux lits catalytiques (221, 222, 223) en série.

4. Procédé selon les revendications 1 et 2, où la réaction de méthanation (220) est réalisée dans deux ou plus de deux lits catalytiques (221, 222, 223) en série avec récupération de la chaleur dégagée lors de la réaction exothermique.

5. Procédé selon les revendications 1 et 2, où la réaction de méthanation (220) est réalisée dans deux ou plus de deux lits catalytiques (221, 222, 223) en série avec récupération de la chaleur dégagée lors de la réaction exothermique et élimination partielle de l'eau afin d'améliorer la conversion du CO₂.

6. Procédé selon l'une des revendications précédentes, où le CO2 éliminé du méthane est éliminé avec une unité cryogénique et stocké sous forme liquide.

7. Procédé selon l'une des revendications précédentes, où une fraction du CO₂ éliminé du méthane est utilisée pour rendre inerte le système d'alimentation du gazéifieur.

8. Procédé selon l'une des revendications précédentes, dans lequel le H₂ nécessaire pour minimiser ou éviter tout excès de CO₂ est obtenu par électrolyse de l'eau.

9. Procédé selon l'une des revendications précédentes, où le H₂ supplémentaire nécessaire pour minimiser ou éviter toute émission de CO₂ est produit par électrolyse uniquement lorsqu'un excès d'électricité est disponible en provenance du réseau.
